Europäisches Patentamt

European Patent Office

Office européen des brevets

(19)

(11) Veröffentlichungsnummer: **0 022 258**

**A1**

(12)

# EUROPÄISCHE PATENTANMELDUNG

(21) Anmeldenummer: 80103811.8

(22) Anmeldetag: 04.07.80

(51) Int. Cl.³: **B 60 C 23/00**
F 17 C 5/06, F 17 C 13/04

(30) Priorität: 06.07.79 AT 4718/79

(43) Veröffentlichungstag der Anmeldung:
14.01.81 Patentblatt 81/2

(84) Benannte Vertragsstaaten:
DE FR GB IT SE

(71) Anmelder: Vereinigte Metallwerke Ranshofen-Berndorf
AG
Wohllebengasse 9
A-1041 Wien IV(AT)

(72) Erfinder: Streicher, Rudolf, Dipl.-Ing.
Wohllebengasse 9
A-1040 Wien(AT)

(72) Erfinder: Koos, Josef
Artillerieplatz 1/2/6
A-1110 Wien(AT)

(74) Vertreter: Hain, Leonhard, Dipl.-Ing.
Tal 18/IV
D-8000 München 2(DE)

(54) Gasfülleinrichtung, insbesondere für aufblasbare Hohlkörper.

(57) Eine Gasfülleinrichtung zum Aufblasen von Hohlkörpern, wie Fahrzeugreifen, weist im Haltekörper (1) für eine Gasdruckpatrone (2) ein Umsteuerventil (6), zweckmäßig in Form eines Ventilkolbens auf. Mittels eines Handhebels (7) ist das Ventil von einer Druckmeßstellung in eine Füllstellung umstellbar. Das Ventil verbindet in der Druckmeßstellung das am Haltekörper (1) eingesetzte und an den Hohlkörper ansteckbare Einblasrohr (12) mit dem im Ventilkolben verschiebbaren Druckanzeigestab (10) zum Messen des Fülldruckes. In der Füllstellung wird hingegen das Einblasrohr (12) über das Ventil mit der Gasdruckpatrone verbunden.

EP 0 022 258 A1

./...

# Fig. 1

Anmelder: Vereinigte Metallwerke Ranshofen-Berndorf AG, Braunau am Inn, Österreich

Titel: Gasfülleinrichtung, insbesondere für aufblasbare Hohlkörper

Beschreibung

Die Erfindung betrifft eine Gasfülleinrichtung, insbesondere für aufblasbare Hohlkörper, wie Fahrzeugreifen od.dgl., mit einer Gasdruckpatrone.

Es ist bekannt, zum Aufblasen von Fahrzeugreifen an dessen Ventil Gasdruckpatronen anzuschließen. Die Patrone wird dabei direkt auf das Ventil aufgeschraubt. Sie gibt nach dem Anstecken ihren gesamten Inhalt in den Reifen ab. Dadurch ist ein Regeln der Füllmenge unmöglich und es kann daher bei verschiedenen Reifengrößen zu Unter- oder Überdrücken kommen. Es ist auch nicht möglich, mehrere Reifen mit derselben Patrone aufzupumpen.

Der Erfindung liegt daher die Aufgabe zugrunde, eine Gasfülleinrichtung zu schaffen, mit der begrenzte Gasmengen aus einer Gasdruckpatrone abgegeben werden können.

Erfindungsgemäß wird diese Aufgabe dadurch gelöst, daß die Gasfülleinrichtung eine auswechselbare Gasdruckpatrone enthält, welche über ein handsteuerbares Ventil an den zu füllenden Hohlkörper anschließbar ist.

Außerdem ist es vorteilhaft, wenn die Gasfülleinrichtung auch eine Druckmeßeinrichtung enthält, die nicht nur beim Füllen wirksam ist, sondern es auch erlaubt, den jeweils bereits vorhandenen Druck im Hohlkörper festzustellen. Dies wird nach einem weiteren Kennzeichen der Erfindung dadurch erreicht, daß das Ventil als Umsteuerventil ausgebildet ist, welches in einer Stellung den Hohlkörper von der Gaspatrone trennt und nur an eine Druckmeßeinrichtung anschließt.

Die Erfindung wird nachfolgend anhand eines Ausführungsbeispieles, das auch in der Zeichnung dargestellt ist, näher beschrieben. Es zeigen:

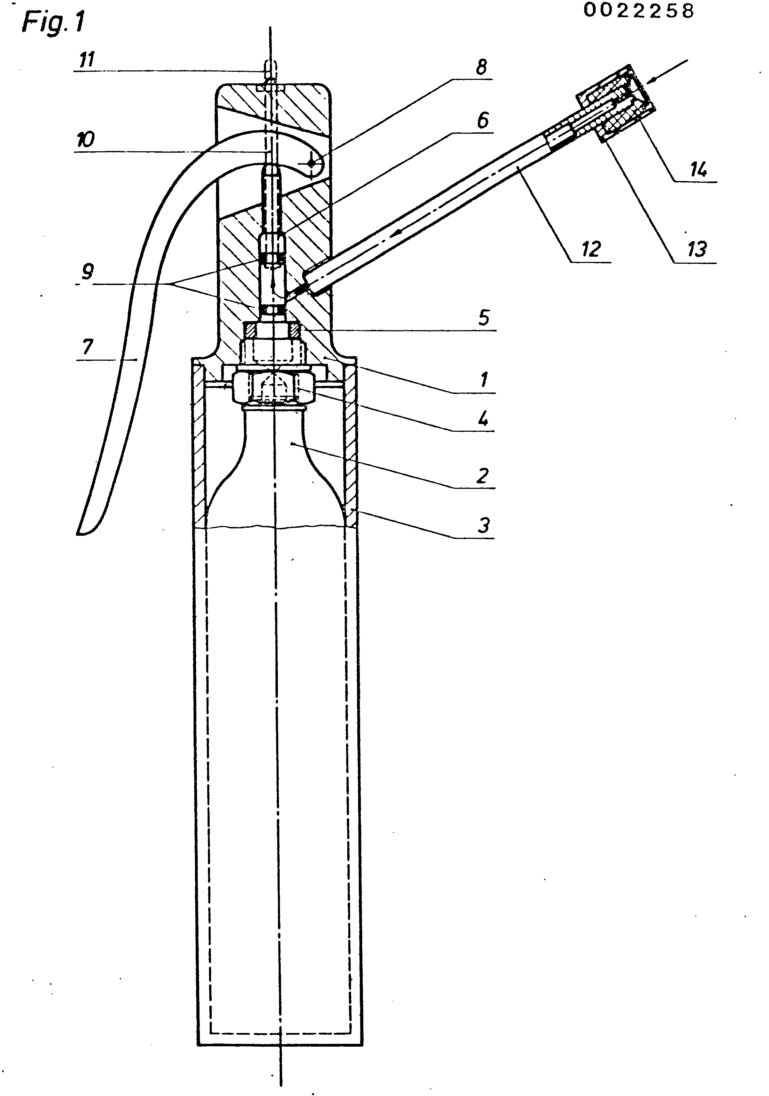

Fig. 1 die Einrichtung beim Druckmessen und

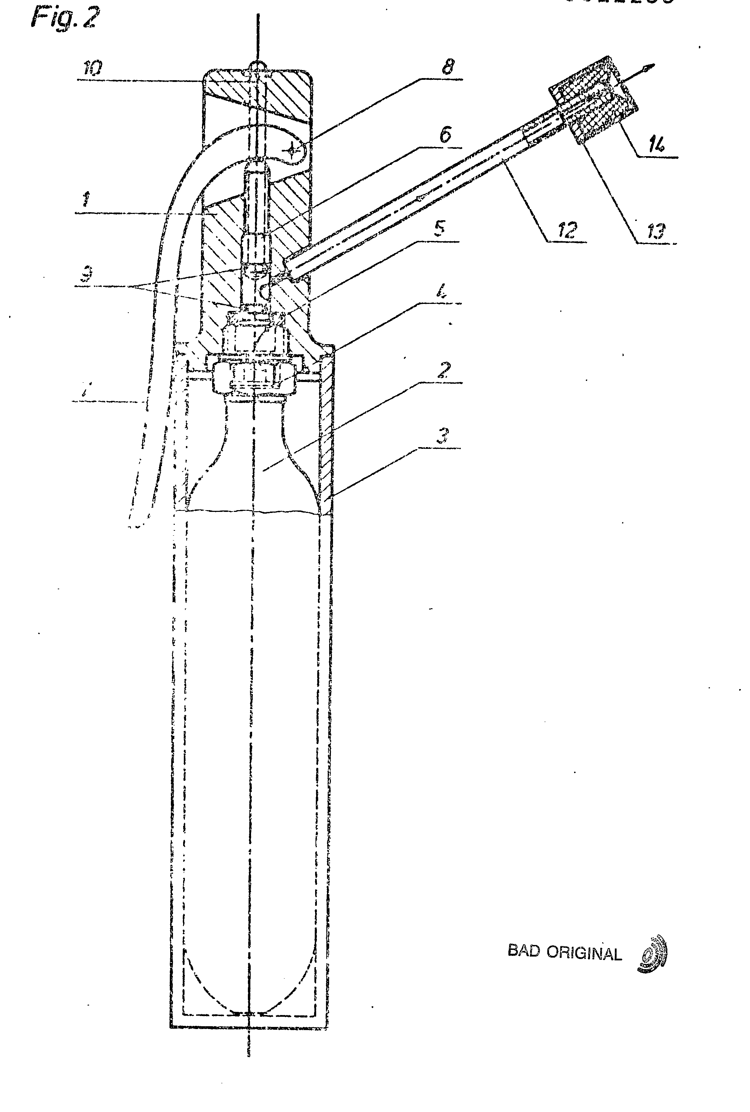

Fig. 2 beim Füllen.

Wie man aus der Zeichnung erkennen kann, besteht die Gasfülleinrichtung aus einem Haltekörper 1, der einen als Ventil ausgebildeten Kolben 6 enthält, welcher zwei O-Ringdichtungen 9 im Abstand voneinander aufweist und durch einen Handhebel 7, der bei 8 schwenkbar gelagert ist, verschoben wird. Der Ventilkolben 6 weist außerdem einen zentrisch angeordneten Druckanzeigestab 10 auf, der mit seiner Anzeigeskala 11 oben aus dem Haltekörper 1 herausragt. Des weiteren ist im Haltekörper 1 ein Einblasrohr 12 mit Anschlußstück 13 und Gummidichtung 14 befestigt, welche an das Ventil des zu füllenden Hohlkörpers angesetzt werden kann. Im Unterteil des Haltekörpers 1 ist mit einer Dichtung 5 ein Reduzierventil 4 angeschlossen, in welches eine Gasdruckpatrone 2 einsetzbar ist. Die Gasdruckpatrone 2 ist von einer Hülle 3 umgeben. Sie kann als wiederfüllbare Patrone oder Einwegpatrone ähnlich wie bei den Siphonflaschen ausgebildet sein und Preßluft, Kohlensäure od.dgl. enthalten. Der Anschluß der Gasdruckpatrone kann mittels Schraubgewinde oder durch Einpressen erfolgen.

Erfindungsgemäß wird ein Gerät vorgeschlagen, mit dem gleichzeitig Luftdruck gemessen und Luftdruck in einem geschlossenen Behälter erzeugt werden kann. Diese kombinierte Funktion erfolgt durch einen speziellen Ventilkolben 6, der sich bei der Druckprüfung in einer Stellung befindet, in der der Druckanzeigestab 10 in Tätigkeit tritt, während beim Betätigen des Hebels 7 der Ventilkolben 6 den Druckmeßteil abschließt und gleichzeitig den Durchlaß für das Einpumpen der Preßluft oder der Kohlensäure in den aufzupumpenden Behälter freigibt. Das Gerät besteht im wesentlichen aus sechs Teilen, und zwar aus der Gasdruckpatrone 2, dem Ventilkolben 6, dem Hebel 7, dem Reduzierventil 4, einem Anschluß für die Gasdruckpatrone mit dem Einblasrohr 12 oder Einblasschlauch zum Befüllen des entsprechenden Behälters, dem Druckanzeigestab 10 für die Druckmessung und dem Haltekörper 1 für das gesamte Gerät.

Sowohl der Hebel 7 als auch das Einblasrohr 12 bzw. Einblasschlauch können in den verschiedensten Varianten ausgeführt werden, so kann z.B. der Hebel arretierbar sein, damit kein ungewolltes Auslösen erfolgen kann. Auch kann der Befüllungsschlauch oder das Befüllungsrohr mit verschiedenen Ventilarten zu versehen sein, die sowohl zum Aufpumpen von Autoreifen wie auch von Schlauchbooten oder Fahrrädern brauchbar sind.

Der Gegenstand der Erfindung ist auf das dargestellte Ausführungsbeispiel nicht beschränkt. Anstelle des Druckmeßstabes 10 kann an den Raum zwischen den beiden O-Ringdichtungen 9 auch ein Zeigermanometer angeschlossen sein.

Anmelder: Vereinigte Metallwerke Ranshofen-Berndorf AG, Braunau am Inn, Österreich

Titel: Gasfülleinrichtung, insbesondere für aufblasbare Hohlkörper

Patentansprüche

1. Gasfülleinrichtung, insbesondere für aufblasbare Hohlkörper, wie Fahrzeugreifen od.dgl., mit einer Gasdruckpatrone, dadurch gekennzeichnet, daß sie eine auswechselbare Gasdruckpatrone (2) enthält, welche über ein handsteuerbares Ventil (6) an den zu füllenden Hohlkörper anschließbar ist.

2. Gasfülleinrichtung nach Anspruch 1, dadurch gekennzeichnet, daß das Ventil (6) als Umsteuerventil ausgebildet ist, welches in einer Stellung den Hohlkörper von der Gasdruckpatrone (2) trennt und nur an eine Druckmeßeinrichtung (10, 11) anschließt.

3. Gasfülleinrichtung nach Anspruch 1 oder 2, dadurch gekennzeichnet, daß zwischen Gasdruckpatrone (2) und Ventil (6) eine Druckreduzierung (4) eingebaut ist.

4. Gasfülleinrichtung nach einem der Ansprüche 1 bis 3, dadurch gekennzeichnet, daß das Ventil (6) als Kolbenschieber ausgebildet ist.

5. Gasfülleinrichtung nach einem der Ansprüche 1 bis 4, dadurch gekennzeichnet, daß die Druckmeßeinrichtung als im Ventilkolben (6) angeordneter, federbelasteter Meßstab (10) ausgebildet ist.

6. Gasfülleinrichtung nach einem der Ansprüche 1 bis 5, dadurch gekennzeichnet, daß eine Arretiervorrichtung vorgesehen ist, die das Ventil (6) bzw. den Betätigungshebel (7) in einer bestimmten Stellung festhält.

Fig.1

0022258

# Fig. 2

Europäisches
Patentamt

# EUROPÄISCHER RECHERCHENBERICHT

Nummer der Anmeldung

EP 80 10 581

| | EINSCHLÄGIGE DOKUMENTE | | KLASSIFIKATION DER ANMELDUNG (Int Cl.) |
|---|---|---|---|
| Kategorie | Kennzeichnung des Dokuments mit Angabe, soweit erforderlich, der maßgeblichen Teile | betrifft Anspruch | |
| X | <u>GB - A - 833 056</u> (SPARKLETS LTD.)<br>* Seite 1, Zeilen 9-16; Seite 2, Zeile 26 - Seite 4, Zeile 10; Abbildungen 1-3 *<br><br>-- | 1 | B 60 C 23/00<br>F 17 C 5/06<br>13/04 |
| | <u>CH - A - 399 930</u> (S.A. SWALLERT)<br>* Insgesamt *<br><br>-- | 1,2,4 | |
| A | <u>FR - A - 2 216 516</u> (NIPPON PISTON RING) | | **RECHERCHIERTE SACHGEBIETE (Int Cl.)** |
| A | <u>FR - A - 1 056 099</u> (G. MORELLI) | | B 01 J 7/00<br>B 60 C 23/00<br>F 16 K 37/00<br>F 17 C 5/06<br>7/00<br>13/04 |
| A | <u>BE - A - 376 941</u> (R. TOLZMANN et al.)<br><br>---- | | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort, | Abschlußdatum der Recherche | Prüfer |
|---|---|---|
| Den Haag | 17-10-1980 | SIEM |

EPA form 1503.1 06.78